# EUROPÄISCHE PATENTSCHRIFT

(11) **EP 0 446 448 B1**
(45) Veröffentlichungstag und Bekanntmachung des Hinweises auf die Patenterteilung: **22.09.1993**
(21) Anmeldenummer: 90123883.2
(22) Anmeldetag: 12.12.1990
(51) Int. Cl.: F16L 37/08

(54) **Verbindungseinrichtung für Druckmittelleitungen od. dgl.**
Connection device for pipes under pressure or equivalent
Dispositif d'assemblage pour tuyaux sous pression ou équivalents

(30) Priorität: 07.03.1990 DE 4007101
(43) Veröffentlichungstag der Anmeldung: 18.09.1991
(73) Patentinhaber: Festo KG, D-73734 Esslingen (DE)
(72) Erfinder: Stoll, Kurt, Dipl.-Ing., W-7300 Esslingen (DE); Köngeter, Herbert, W-7313 Reichenbach (DE)
(74) Vertreter: Abel, Martin, Dipl.-Ing.

(56) Entgegenhaltungen:
- EP-A- 0 247 214
- WO-A-85/05164
- WO-A-87/05087
- US-A- 3 743 326

## Beschreibung

Die Erfindung betrifft eine Verbindungseinrichtung für Druckmittelleitungen o.dgl. gemäß dem Oberbegriff des Anspruches 1.

Eine derartige Verbindungseinrichtung geht aus der WO-A-87/05087 hervor. Diese besitzt ein Gehäuse mit einer Gehäuseausnehmung, in der eine Spannzange axial verschiebbar aufgenommen ist. Die Spannzange hat eine ring- oder hülsenförmige Betätigungspartie, die aus der Gehäuseausnehmung herausragt. Axial innen sind an die Betätigungspartie mehrere Klemmelemente angeformt, die wegen dazwischenliegender Biegestellen radial beweglich sind. Der Endbereich der Klemmelemente ist abgeschrägt und liegt einer ebenfalls abgeschrägten Abstützfläche des Gehäuses gegenüber. Der Schrägverlauf ist in beiden Fällen so gewählt, daß sich eine kegelstumpfähnliche Kontur ergibt, wobei der Bereich geringeren Durchmessers der axialen Außenseite der Gehäuseausnehmung zugeordnet ist. Normalerweise nehmen die Klemmelemente eine Klemmstellung ein, in der sie ein eingestecktes Anschlußende einer Druckmittelleitung radial beaufschlagen. Zur Entnahme des Anschlußendes wird die Spannzange nach axial innen verschoben, wobei die Klemmelemente an der schrägen Abstützfläche geführt nach radial außen wandern und das Anschlußende freigeben. Andererseits wird die Spannzange bei einer Zugbeanspruchung des Anschlußendes zusammen mit diesem nach axial außen verlagert, wobei die Klemmelemente mit ihrer äußeren Oberfläche an einer schrägen Anschlagfläche des Gehäuses entlanggleiten und dadurch zur Verstärkung der Klemmwirkung nach radial innen gedrückt werden.

Es hat sich gezeigt, daß der notwendige axiale Verschiebeweg der Betätigungspartie, um die Klemmelemente aus der Klemmstellung in die Lösestellung zu verbringen, relativ groß ist. Überdies besteht die Möglichkeit, daß sich die Klemmelemente gegenüber der schrägen Abstützfläche verkeilen und nach der Entnahme eines Anschlußendes nicht ohne weiteres in die Klemmstellung zurückkehren.

Es ist daher die Aufgabe der vorliegenden Erfindung, eine Verbindungseinrichtung gemäß der eingangs genannten Art zu schaffen, die bei teilearmem Aufbau einfach handhabbar ist und ein effektiveres Betätigen der Klemmelemente ermöglicht.

Die vorstehende Aufgabe wird in Verbindung mit den kennzeichnenden Merkmalen des Anspruches 1 gelöst.

Der somit vorhandene Schrägverlauf der Abstützfläche besitzt im Vergleich zum Stand der Technik eine entgegengesetzte Neigung und bewirkt bei nur geringfügiger axialer Verlagerung der Betätigungspartie in Löserichtung ein kräftiges Verschwenken der Klemmelemente nach radial außen in die Freigabestellung. Der schräge Verlauf der Abstützfläche, deren radial äußerer Bereich axial näher an der Öffnung der Gehäuseausnehmung liegt als ihr radial innerer Bereich, hat ein effektives Verschwenken der Klemmelemente ohne die Gefahr eines Verkeilens zur Folge, so daß die Funktionsfähigkeit dauerhaft gewährleistet ist.

Im Falle der EP-A-0 247 214 und der WO-A-8505164 werden Verbindungseinrichtungen gezeigt, die im wesentlichen derjenigen der WO-A-87/05087 entsprechen. Dies gilt insbesondere hinsichtlich der Neigung und des Schrägverlaufes der Abstützfläche. Im Falle der US-A-3,743,326 fehlt eine Abstützfläche vollständig, dort werden die Klemmelemente allein durch die elastische Vorspannung im Bereich der Biegestelle ausgehoben, wenn der Berührkontakt zur Abstützfläche gelöst wird.

Vorteilhafte Weiterbildungen der Erfindung sind in den Unteransprüchen aufgeführt. Grundsätzlich sei noch darauf hingewiesen, daß der Begriff "Druckmittelleitung" allgemein zu verstehen ist und beispielsweise auch Schläuche einbezieht.

Bei der Spannzange handelt es sich zweckmäßigerweise um ein einstückiges Kunststoffbauteil.

Wenn die Druckpartien in eine Halterungsvertiefung hineinragen, deren Vertiefungsflanken zumindest die Abstützfläche bilden, ergibt sich eine sichere Fixierung der Spannzange.

Der verstärkende Klemmeffekt unter Vermittlung der Abstützfläche läßt sich auch durch Verwendung eines zusätzlichen Drückelementes erzielen, das der Spannzange in der Gehäuseausnehmung axial innen gegenüberliegt und axial verschiebbar ist. Bei Druckbeaufschlagung der Druckmittelleitung oder des sich an die Gehäuseausnehmung anschließenden Gehäusekanales wird das Drückelement fluidbetätigt gegen die Spannzange verschoben und drückt gegen an der zugewandten Seite der Klemmelemente vorgesehene Stützflächen, so daß die Druckpartien gegen die Abstützfläche arbeiten. Bei dem Drückelement handelt es sich zweckmäßigerweise um einen Dichtring, der insbesondere als Doppellippen-Dichtring ausgebildet ist und sowohl bei Vakuum-Betrieb als auch bei Überdruckbetrieb ausgezeichnet dichtet.

Die Verbindungseinrichtung kann als Verbindungsstück ausgebildet sein, wobei das Gehäuse ein selbständiges Teil bildet und an beliebiger Stelle festlegbar ist oder weitere Möglichkeiten zum Anschließen von Druckmittelleitungen aufweist. Darüberhinaus kann das Gehäuse aber auch Teil eines Gerätegehäuses sein, beispielsweise in Gestalt eines Ventilgehäuses oder Zylinderrohres, in das die Gehäuseausnehmung eingebracht ist. Bei Ausbildung als selbsttätiges Verbindungsstück ist zweckmäßigerweise die Gehäuseausnehmung oder der sich anschließende Gehäusekanal mit einem Profilabschnitt zum Einstecken eines Schraubwerkzeuges versehen, so daß sich ein solcher außen erübrigt, was kompakte Radialabmessungen zuläßt.

Im folgenden wird die Erfindung anhand in der beigefügten Zeichnung dargestellter Ausführungsbeispiele näher erläutert. Es zeigen:
- Fig. 1: eine erste Bauform der Verbindungseinrichtung im Längsschnitt, wobei unterhalb der Symmetrielinie eine Klemmstellung und oberhalb der Symmetrielinie eine Lösestellung abgebildet ist,
- Fig. 2: eine ähnlich der Spannzange nach Fig. 1 ausgebildete Spannzange in perspektivischer Darstellung und aufgebrochen, wobei das Gehäuse nur schematisch angedeutet ist.
- Fig. 3 bis 5: eine weitere Variante in verschiedenen Ansichten.

Die Verbindungseinrichtung enthält ein Gehäuse 1, das eine Gehäuseausnehmung 2 aufweist, an die sich ein weiterführender Gehäusekanal 3 anschließt. In die Gehäuseausnehmung 2 ist zur Herstellung einer Anschlußverbindung das Anschlußende 4 einer Druckmittelleitung 5 einsteckbar, die aus Metall und insbesondere Kunststoff bestehen kann und beispielweise schlauchförmig ausgebildet ist. Auf diese Weise kommuniziert der Leitungskanal mit dem Gehäusekanal 3, und es kann eine Durchströmung seitens eines Druckmittels oder Vakuums stattfinden.

Zum lösbaren Festlegen der Druckmittelleitung 5 gegenüber dem Gehäuse 1 ist eine ringförmige Spannzange 6 vorgesehen, die im Bereich der Gehäuseausnehmung 2 insbesondere innerhalb derer gehalten ist, wobei die Anordnung bevorzugt koaxial zur Gehäuseausnehmung 2 erfolgt. Ein in Gebrauchsstellung in die Gehäuseausnehmung 2 ragendes Anschlußende 4 wird von der Spannzange 6 somit im Bereich seines Außenumfanges 7 umgeben.

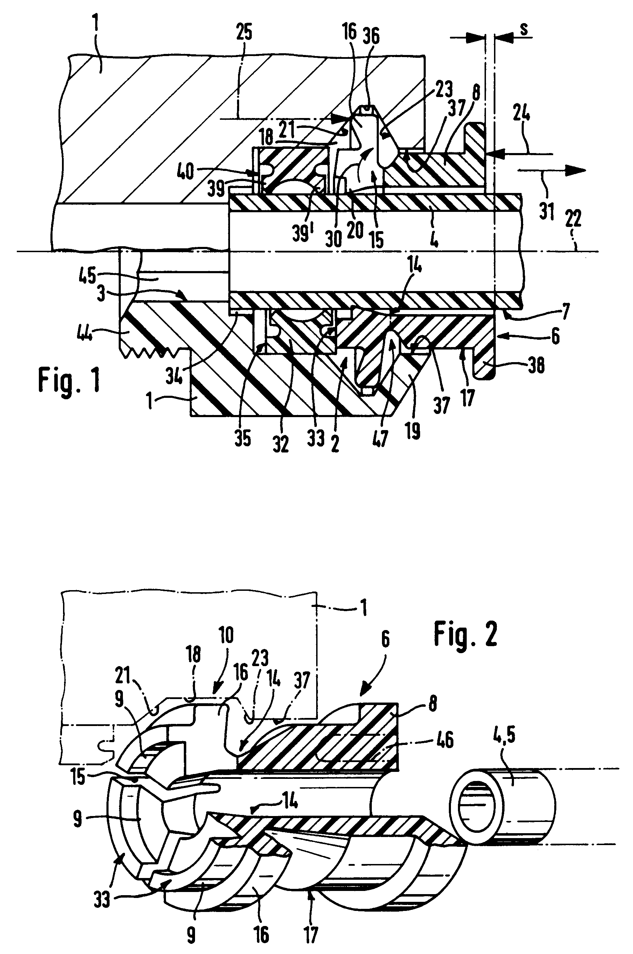

Die Spannzange 6 verfügt über eine ring- oder hülsenförmige Betätigungspartie 8, die bei Bedarf geschlitzt ausgebildet sein kann. An deren dem Innern der Gehäuseausnehmung 2 zugewandter Seite, das heißt an der derjenigen Seite, die axial ins Innere der Gehäuseausnehmung 2 weist, sind mehrere aus Fig. 2 gut ersichtliche Klemmelemente 9 angeordnet. Diese stellen die Klemmpartie 10 der Spannzange 6 dar, indem sie in Umfangsrichtung mit Bezug zur Gehäuseausnehmung 2 oder zur Betätigungspartie 8 aufeinanderfolgend angeordnet sind. Beim Ausführungsbeispiel sind vier solcher Klemmelemente 9 vorgesehen, die segmentartig ausgestaltet sind, bei Bedarf kann auch eine andere Anzahl , z.B. sechs Stück, vorhanden sein. Jedes Klemmelement 9 ist mit der Betätigungspartie 8 über einen Biegebereich oder eine Biegestelle 14 verbunden, so daß sie unabhängig voneinander in gewissem Rahmen verschwenkbar sind. Je nach der eingenommenen Schwenkstellung ergibt sich eine mehr oder weniger große Aufspreizung mit entsprechend variierendem Querschnitt des von den Klemmelementen 9 umschlossenen Klemmbereichs. Zur Trennung der einzelnen Klemmelemente 9 voneinander sind zwischen in Umfangsrichtung jeweils benachbarten Klemmelementen 9 vorzugsweise Schlitze 15 vorgesehen, die sich zweckmäßigerweise bis in den Bereich der Biegestelle 14 erstrecken. Sie verlaufen insbesondere in sich gleichzeitig axial und radial erstreckenden Ebenen.

Vorzugsweise handelt es sich bei der Spannzange um ein einstückiges Bauteil , bei dem die Klemmelemente 9 an die Betätigungspartie 8 angeformt sind. Als besonders kostengünstige Variante bietet sich hier die Herstellung als Spritzgußteil aus Kunststoffmaterial an. Beim Ausführungsbeispiel ergeben sich die Biegestellen durch stegartige Bereiche mit verringerter radialer Materialstärke.

Jedes Klemmelement 9 verfügt über eine Druckpartie 16, die zumindest teilweise weiter radial außen als die zugeordnete Biegestelle 14 angeordnet ist. Beim Ausführungsbeispiel sind die Druckpartien 16 von radial nach außen ragenden Vorsprüngen der Klemmelemente 9 gebildet, die sich zweckmäßigerweise in Umfangsrichtung entlang des jeweiligen Klemmelementes 9 erstrecken. Die Druckpartien 16 ragen außerdem radial über die Mantelfläche 17 des sich an die Biegestellen 14 anschließenden Bereiches der Betätigungspartie 8 vor.

Zur unverlierbaren Halterung der Spannzange 6 gegenüber dem Gehäuse 1 ist die Klemmpartie 10 mit ihren Druckpartien 16 in einer insbesondere ringförmigen Halterungsvertiefung 18 aufgenommen, die nach Art einer Nut in den Innenumfang der Gehäuseausnehmung 2 eingearbeitet ist. Die Halterungsvertiefung 18 kann sich auch in axialer Verlängerung außen an die Gehäuseausnehmung 2 anschließen. Ihre Herstellung erfolgt beispielsweise durch Ausdrehen, unmittelbar beim Formen des Gehäuses 1 oder aber durch Umbördeln nach innen eines zuvor zylindrischen Randbereiches 19am Umfang der Gehäuseausnehmung 2.

Zur Montage der Spannzange 6 werden vor dem Einführen eines Anschlußendes 4 die Klemmelemente 9 um die Biegestelle 14 nach radial innen verschwenkt, so daß die Klemmpartie 10 in die Gehäuseausnehmung 2 einführbar ist, und wenn die der Halterungsvertiefung 18 entsprechende Axialposition erreicht ist, klappen die Klemmelemente 9 auf Grund der elastischen Biegeaufhängung nach außen in die bisher beschriebene Grundstellung, wobei die Druckpartien 16 innerhalb der Halterungsvertiefung 18 zu liegen kommen.

In dieser Grundstellung ist die von der Klemmpartie 10 innen begrenzte Querschnittsfläche zweckmäßigerweise etwas geringer als der Außenquerschnitt eines anzuschließenden Anschlußendes 4. Daher werden die Klemmelemente 9 beim Hindurchstecken eines Anschlußendes 4 geringfügig nach außen gespreizt, so daß sie mit einer gewissen Vorspannung gegen den Außenumfang 7 arbeiten. Wegen der Tendenz, elastisch in die Grundstellung zurückzufedern, wird hierbei bereits eine Klemmstellung erzielt. Zur Verbesserung des Klemmgriffes können die Klemmelemente 9 in dem mit einem jeweiligen Anschlußende 4 zusammenarbeitenden Bereich jeweils mit einem oder mehreren zahnartigen od.dgl. Vorsprüngen 20 versehen sein.

Den Druckpartien 16 liegt axial innen eine Abstützfläche 21 gegenüber, die beim Ausführungsbeispiel von der weiter innen liegenden Flanke der Halterungsvertiefung 18 gebildet ist. Sie ist axial unverschieblich gehäusefest angeordnet. Bezugnahmen auf eine Axialrichtung verstehen sich in dieser Beschreibung jeweils als Bezugnahmen auf die Gehäuseausnehmung 2 und deren Längsachse 22 bzw. die darin gehalterte Spannzange 6.

Axial außen liegt den Druckpartien 16 ferner vorzugsweise eine Anschlagfläche 23 gegenüber, die beim Ausführungsbeispiel von der äußeren Vertiefungsflanke gebildet ist. Somit liegen sich hier die beiden Flächen 21,23 mit axialem Abstand gegenüber, und die Druckpartien 16 sind im dazwischenliegenden Bereich angeordnet.

Die Haltefunktion der Anschlagfläche 23 in bezug auf das unverlierbare Fixieren der Spannzange 6 kann bei einem nicht näher dargestellten Ausführungsbeispiel auch auf andere Weise bewerkstelligt werden. Beim Ausführungsbeispiel hat die Anschlagfläche 23 jedoch eine noch zu erläuternde besondere Funktion, die ihr Vorhandensein vorteilhaft erscheinen läßt, so daß es zweckmäßig ist, in sie auch die Haltefunktion zu integrieren.

Wenn ein eingestecktes, von der Klemmpartie 10 gehaltenes Anschlußende 4 entfernt werden soll, bedarf es nurmehr eines geringfügigen Druckes in Löserichtung gemäß Pfeil 24 von außen her axial gegen die Betätigungspartie 8. Selbige wird dadurch in Längsrichtung 22 in Richtung des Inneren der Gehäuseausnehmung 2 verschoben, wodurch die Druckpartien 16 an die Abstützfläche 21 angedrückt werden. Wegen der dabei auf die Druckpartien 16 wirkenden Gegenkraft, die bei 25 strichpunktiert angedeutet ist, vollführen die Druckpartien 16 eine geringfügige Schwenkbewegung gemäß Pfeil 30 um den Bereich der jeweils zugehörigen Biegestelle 14. Dadurch entfernen sich die Klemmelemente 9 in Radialrichtung vom Anschlußende 4, bis dessen Herausziehen wegen des verringerten oder gelösten Klemmgriffes möglich ist. Bei entferntem Anschlußende und entfernter Druckkraft 24 stellt sich die Spannzange 6 vorzugsweise selbsttätig in die erwähnte Grundstellung zurück, ausgelöst von der elastischen Aufhängung der Klemmelemente 9 über die Biegestellen 14 an der Betätigungspartie 8 und die Abstützung der Druckpartien 19 an der Abstützfläche 21, wobei die Betätigungspartie wieder zurückgeschoben wird.

Beim Verschieben in Löserichtung gleiten die Druckpartien 16 zweckmäßigerweise zumindest geringfügig an der Abstützfläche 21 ab. Um den Bewegungsablauf zu unterstützen, besitzt die Abstützfläche 21 zumindest in dem mit der jeweiligen Druckpartie 16 zusammenarbeitenden Bereich einen schrägen Verlauf. Dies ist beim Ausführungsbeispiel der Fall, wo der radial weiter innen liegende Flächenbereich tiefer in der Gehäuseausnehmung 2 angeordnet ist als der radial weiter außen liegende Bereich. Die von der ringförmigen Abstützfläche 21 begrenzte Querschnittsfläche verringert sich daher in Löserichtung gemäß Pfeil 24. Im Längsschnitt gemäß Fig. 1 gesehen, bietet sich ein linearer Verlauf der Abstützfläche 21 an, obwohl bei Bedarf auch gewisse Wölbungen vorgesehen werden können.

Auch die Anschlagfläche 23 ist vorzugsweise als ringförmige Schrägfläche ausgebildet, wobei sich der von ihr umschlossene Querschnitt allerdings entgegen der Löserichtung 24, d.h. in Klemmrichtung 31, verringert. Es versteht sich, daß die ringförmigen Flächen 21,23 bei Bedarf am Umfang stellenweise Unterbrechungen aufweisen können.

Insgesamt begrenzen somit die beiden Flächen 21,23 eine Vertiefung 18 mit im wesentlichen V-förmig ausgebildetem Flankenverlauf, betrachtet im Schnitt gemäß Fig. 1.

Der oben bereits angedeutete Vorzug der Anschlagfläche 23 besteht darin, daß sie bei in Klemmrichtung 31 auf das Anschlußende 4 ausgeübtem Zug eine Verstärkung der Klemmwirkung hervorruft. Denn bei einer derartigen Belastung wird die Spannzange 6 unter Vermittlung des zwischen dem Anschlußende 4 und der Klemmpartie 10 bestehenden Klemmgriffes in entsprechender Weise nach außen verlagert, so daß die Druckpartien 16 gegen die Anschlagfläche 23 arbeiten. Dies hat wiederum zur Folge, daß die Klemmelemente 9 im umgekehrten Sinne des Pfeiles 30 nach radial innen gedrückt bzw. gebogen werden, wodurch sich der auf den Außenumfang 7 ausgeübte Anpreßdruck verstärkt.

Die gleiche Wirkung wird vorteilhafterweise auch dann erzielt, wenn der Gehäusekanal 3 oder Leitungskanal mit Innendruck beaufschlagt wird. Zu diesem Zweck ist in der Gehäuseausnehmung 2 axial innerhalb der Klemmpartie 10 ein Dichtring 32 axial verschiebbar angeordnet. Diesem Dichtring 32 liegen an den Klemmelementen 9 vorgesehene Stützflächen 33 gegenüber. Sie befinden sich vorzugsweise in etwa im radialen Bereich zwischen den Biegestellen 14 und den Druckpartien 16. Der Dichtring 32 umschließt ein eingestecktes Anschlußende 4 koaxial wie die Spannzange 6. Bei Auftreten des Innendruckes vermag nun das Druckmittel durch die vorhandenen Zwischenräume 34 zwischen dem Endbereich der Druckmittelleitung 5 und der Gehäuseausnehmung 2 den Dichtring 32 auf der der Spannzange 6 abgewandten Axialseite 35 zu beaufschlagen. Der Dichtring 32 wird dadurch in Richtung zur Spannzange 6 verschoben und drückt gegen die Stützflächen 33, wodurch sich auch die Spannzange geringfügig verschiebt und letztlich die Druckpartien 16 gegen die Anschlagfläche 23 arbeiten, mit der oben bereits beschriebenen Folge des Nach- innen-Schwenkens der Klemmelemente 9. Mit zunehmendem Innendruck wird daher die auf das Anschlußende 4 wirkende Klemmkraft verstärkt. Die entsprechende Stellung von Dichtring 32 und Spannzange 6 ist in Fig. 1 in der unteren Bildhälfte illustriert.

Es ist zweckmäßigerweise vorgesehen, daß die Druckpartien 16 zumindest in der Grundstellung der Klemmelemente 9 mit axialem Bewegungsspiel zwischen der Abstützfläche 21 und der Anschlagfläche 23 angeordnet sind. Dies verhindert ein Verklemmen und begünstigt ein leichtes Verschwenken der Druckpartien 16. Insbesondere aus demselben Grunde ist vorzugsweise vorgesehen, daß zwischen den einzelnen Druckpartien 16 und dem radial gegenüberliegenden Grund 36 der Halterungsvertiefung 18 radiales Spiel vorgesehen ist.

Die spielbehaftete Aufnahme der Druckpartien 16 bewirkt außerdem eine ungehinderte Anpassung der Klemmelementenstellung an den jeweiligen Außendurchmesser eines eingesteckten Anschlußendes. Es findet somit ein automatischer ungehinderter Toleranzausgleich statt.

In Fig. 1 ist mit dem Abstand s der Weg angedeutet,um den die Betätigungspartie 8 gemäß Pfeil 24 zu verschieben ist, um ausgehend von einer Klemmstellung die bereits erläuterte Lösestellung zu erhalten.

Um bei angeschlossener Druckmittelleitung 5 im Betrieb die Belastung der Biegestellen 14 so gering wie möglich zu halten, ist die Betätigungspartie 8 zweckmäßigerweise quer zur Längsachse 22 gehäusefest abgestützt. Hierzu ist vorgesehen, daß sie im Bereich ihres Außenumfanges am Gehäuse 1 verschiebbar geführt gelagert ist. Beim Ausführungsbeispiel stellt ein sich nach axial außen an die Halterungsvertiefung 18 anschließender Abschnitt der Innenoberfläche der Gehäuseausnehmung 2 eine Führungsfläche 37 dar, die einen Längenabschnitt der Mantelfläche 17 mit Gleitspiel umschließt.

Aus Fig. 1 wird deutlich, daß an der Betätigungspartie 8 außerhalb der Gehäuseausnehmung 2 eine zusätzliche Betätigungshilfe 38 z.B. in Gestalt eines flanschförmigen Radialvorsprunges vorgesehen sein kann.

Zurückkommend auf den Dichtring 32 sei erwähnt, daß selbiger zweckmäßigerweise in Gestalt eines Doppellippen-Dichtringes ausgestaltet ist, wie dies die Fig. 1 vermittelt. Es sind zwei axial versetzt zueinander angeordnete Dichtlippen 39,39' vorgesehen, die beide gegen den Umfang des Anschlußendes 4 arbeiten. Die innere Dichtlippe 39 dient zur Abdichtung bei Innendruckbeaufschlagung. Die äußere Dichtlippe 39' verhindert ein Eindringen von Umgebungsluft, wenn im Gehäusekanal 3 Vakuum anliegt. Auf diese Weise läßt sich die Verbindungseinrichtung ohne Umrüstung universell einsetzen. Weil die Dichtlippen 39,39' in Radialrichtung nachgiebig sind, erfolgt außerdem eine automatische Anpassung an den jeweiligen Leitungsquerschnitt. Beide Dichtlippen sind an einem Grundkörper angeordnet und ragen von diesem zweckmäßigerweise nach innen und gleichzeitig zur jeweils zugeordneten Axialseite, so daß ein schräger Verlauf entsteht, im Querschnitt etwa U- oder V-förmig.

Im Bereich des Zusammenwirkens mit den Stützflächen 33 können am Dichtring bei Bedarf Mittel zur Verschleißminderung vorgesehen sein, z.B. ein härterer Belag. Es ist darüber hinaus möglich, als die Stützflächen 33 unmittelbar beaufschlagendes Drückelement 40 nicht den Dichtring selbst, sondern ein zwischen diesem und der Spannzange 6 angeordnetes separates Element vorzusehen (nicht dargestellt).

In der unteren Bildhälfte der Fig. 1 ist das Gehäuse 1 derart ausgestaltet, daß die Verbindungseinrichtung ein selbständiges Verbindungsstück darstellt, das sich an einem gewünschten Bauteil, z.B. einem Druckspeicher, festlegen läßt. Daher ist an der der Gehäuseausnehmung 2 entgegengesetzten Seite ein Gewindeteil insbesondere in Gestalt eines Gewindestutzens 44 vorgesehen, das vom Gehäusekanal 3 durchzogen wird und an entsprechender Stelle festschraubbar ist. Natürlich können anstelle des Gewindeteils 44 auch andere Verbindungsmittel vorgesehen sein, außerdem ist es möglich, hier oder an anderer Stelle des Gehäuses 1 weitere Möglichkeiten zu treffen, die das Anschließen eines weiteren Anschlußendes 4 erlauben.

Wenn die Verbindungsmittel als Gewindeteil 44 ausgebildet sind, ist es zweckmäßig, in der Gehäuseausnehmung 2 oder, wie abgebildet, in dem sich an diese anschließenden Bereich des Gehäusekanals 3 einen insbesondere mehreckförmigen Innenprofilabschnitt 45 zum Ansetzen eines Schraubwerkzeuges z.B in Gestalt eines Innenmehrkantschlüssels vorzusehen. Das Schraubwerkzeug kann in diesem Falle durch die Gehäuseausnehmung 2 eingeführt werden. Der Vorzug besteht vor allem darin, daß außen am Gehäuse 1 keinerlei entsprechende Vorkehrungen zum Einschrauben zu treffen sind, was kompakte radiale Abmessungen erlaubt.

Im oberen Bildabschnitt der Fig. 1 ist alternativ ein Gehäuse 1 angedeutet, das Bestandteil eines größeren Gerätegehäuses ist, z.B. eines Ventilgehäuses. Der Aufbau der Verbindungseinrichtung gestattet es also, an einem beliebigen Gerätegehäuse eine Gehäuseausnehmung 2 der beschriebenen Art vorzusehen, in die dann nur noch die Spannzange 6 eingesetzt werden muß, um die Verbindungseinrichtung zu erhalten. Man spart sich also ein separates Gehäuse 1, der Fertigungsaufwand reduziert sich auf die Spannzange 6.

Die Druckpartien 16 können wulstartig ausgebildet sein. Die Biegestellen 14 stellen quasi Gelenke dar. Der Führungskontakt zwischen Gehäuse 1 und Betätigungspartie 8 hat neben den erwähnten Vorteilen eine automatische Zentrierung zur Folge. Die Abstützfläche 21 und die Anschlagfläche 23 können von mehreren in Umfangsrichtung aufeinanderfolgend angeordneten Flächenabschnitten gebildet sein. Die Druckpartien 16 können im Kontaktbereich mit der Abstützfläche 21 und insbesondere mit der Anschlagfläche 23 angefast sein, wobei eine Fase von ca. 15° zweckmäßig ist, gemessen in der Grundstellung. Zur Gewichtseinsparung kann in der Betätigungspartie 8 von axial außen her eine gestrichelt angedeutete, rundum laufende Ausnehmung 46 vorgesehen sein. Besonders zweckmäßig ist es, die Biegestellen 14 im radialen inneren Bereich der Spannzange 6 vorzusehen, wie dies die Ausführungsbeispiele dokumentieren. Eine erforderliche Materialabschwächung ergibt sich hier beispielsweise durch eine umlaufende Ausnehmung 47 im radial gegenüberliegenden äußeren Bereich, die auch ein problemloses Zurückschwenken der Klemmelemente 9 gewährleistet. Die Stützflächen 33 befinden sich insbesondere an der axial nach innen weisenden Seite der Klemmelemente.

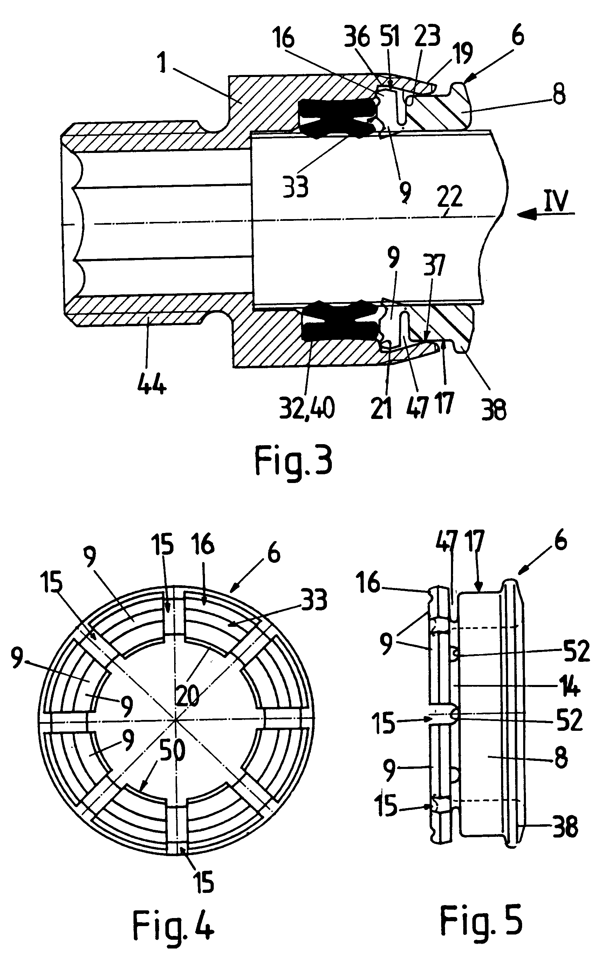

Die Figuren 3 bis 5 zeigen eine als Verbindungsstück ausgebildete Verbindungseinrichtung, wobei Figur 3 einen Längsschnitt darstellt, die Figur 4 eine Vorderansicht in axialer Richtung 22 gemäß Pfeil IV der verwendeten Spannzange 6 zeigt und in Figur 5 eine Seitenansicht in radialer Richtung der Spannzange 6 ohne Gehäuse abgebildet ist. Da das Funktionsprinzip dieser Variante mit den Ausführungsbeispielen gemäß Figuren 1 und 2 übereinstimmt und lediglich in einigen konstruktiven Details Änderungen vorgenommen worden sind, bezieht sich die bisherige Beschreibung auch auf diese weitere Ausführungsform und entsprechende Bauteile sind mit identischen Bezugszeichen versehen worden.

Die Spannzange gemäß Ausführungsbeispiel gemäß Figuren 3 bis 5 verfügt über acht Klemmelemente 9, die besonders gut in Figur 4 erkennbar sind. Sie sind durch Schlitze 15 voneinander getrennt, so daß ihre Bewegbarkeit relativ zueinander in radialer Richtung beim Übergang zwischen den einzelnen Stellungen nicht behindert wird. Man wird die Anzahl der Klemmelemente 9 vom Querschnitt der von ihnen zu begrenzenden Klemmöffnung 50 abhängig machen.

Während beim Ausführungsbeispiel gemäß Figuren 1 und 2 die im Längsschnitt gesehene Neigung der Abstützfläche 21 und Anschlagfläche 23 mit Bezug zur Längsachse 22 in etwa gleich ist, ist bei der Variante gemäß Figuren 3 bis 5 die Neigung der Abstützfläche 21 erheblich steiler als diejenige der Anschlagfläche 23. In dem der Anschlagfläche 23 zugewandten Bereich verfügen die Druckpartien 16 zweckmäßgerweise über eine Abschrägung, deren Fläche in etwa und insbesondere in der Grundstellung parallel zur zugewandt gegenüberliegenden Anschlagfläche 23 verläuft. Von axial außen in Richtung nach axial innen steigt die im Längsschnitt gemäß Figur 3 gesehene Konturlinie der Anschlagfläche 23 sanft an, um im Bereich des maximalen Abstandes zur Längsachse 22 vorzugsweise in einen den Grund 36 darstellenden zylindrischen Bereich kurzer axialer Länge überzugehen, an den sich dann mit rasch verringerndem Abstand zur Längsachse 22 und daher mit stärkerer Neigung als die Anschlagfläche 23 die Abstützfläche 21 anschließt. In der Grundstellung gesehen befindet sich derjenige Bereich der Druckpartie 16, der an der Abstützfläche 21 zur Anlage kommt, zweckmäßigerweise im wesentlichen in etwa auf einer gemeinsamen Radialebene mit den Stützflächen 33, die radial etwas weiter innen an der von der Betätigungspartie 8 wegweisenden Axialseite der Klemmelemente 9 vorgesehen sind.

Der von der Betätigungspartie 8 begrenzte Innendurchmesser entspricht zweckmäßigerweise dem Außendurchmesser des einzusteckenden Anschlußendes und ist insbesondere etwas größer gewählt, so daß etwas Bewegungsspiel zur Verfügung steht. Zur Stabilisierung der Radialposition stützt sich die Betätigungspartie 8 zusätzlich mit ihrer äußeren Mantelfläche 17 axial verschiebbar an der Führungsfläche 37 ab, die sich axial außen an die Anschlagfläche 23 anschließt und beim Ausführungsbeispiel radial innen im Bereich des freien Endes eines ringförmigen Gehäuserandes 19 vorgesehen ist. Dieser Gehäuserand 19 ist beim Ausführungsbeispiel ursprünglich nach Art eines hohlzylindrischen Ringes geformt und anschließend in die dargestellte Stellung nach radial innen umgebogen worden, so daß die sich nach axial innen an die Führungsfläche oder Führungspartie 37 anschließende Umfangsfläche des Randes zweckmäßigerweise gleichzeitig die Anschlagfläche 23 bildet. Natürlich kann der Rand 19 bei der Herstellung unmittelbar in die entsprechende Form gebracht worden sein. Er kann auch entlang seines Umfanges mindestens einmal und vorzugsweise mehrmals geschlitzt sein, in etwa vergleichbar mit der Anordnung der Klemmelemente 9.

Einer guten Schwenkbarkeit der Klemmelemente 9 ist besonders förderlich, wenn die axial gemessene Tiefe der Schlitze 15 bishin zum Beginn der Betätigungspartie 8 reicht, so daß die Biegestellen 14 im Bereich radial innerhalb der Vertiefung 47 entstehen und die zu in Umfangsrichtung benachbarten Klemmelementen 9 gehörenden Biegestellen 14 somit ebenfalls in Umfangsrichtung durch die Endausläufer 52 der Schlitze 15 voneinander getrennt sind.

## Patentansprüche

1. Verbindungseinrichtung für Druckmittelleitungen o.dgl., mit einem Gehäuse (1), das eine Gehäuseausnehmung (2) aufweist, in die das Anschlußende (4) einer Druckmittelleitung (5) einsteckbar ist,
mit einer im Bereich der Gehäuseausnehmung (2) gehaltenen ringförmigen Spannzange (6) die das eingesteckte Anschlußende (4) umgibt und dieses in einer Klemmstellung lösbar gegenüber dem Gehäuse (1) festlegen kann,
wobei die Spannzange (6) über eine axial verschiebbare ring- oder hülsenförmige Betätigungspartie (8) verfügt, an deren dem Innern der Gehäuseausnehmung (2) zugewandter Seite eine Mehrzahl von in Umfangsrichtung verteilt angeordneten Klemmelementen (9) vorgesehen ist, die in der Klemmstellung gegen den Umfang (7) des betreffenden Anschlußendes (4) arbeiten, und die über Biegestellen (14) mit der Betätigungspartie (8) verbunden sind, um eine Bewegung der Klemmelemente (9) zwischen der Klemmstellung und einer radial weiter außen liegenden Lösestellung zu erlauben,
mit einer am jeweiligen Klemmelement (9) vorgesehenen, bezüglich der jeweils zugeordneten Biegestelle (14) radial weiter außen liegenden Druckpartie (16),
mit einer gehäuseseitig vorgesehenen schrägen Abstützfläche (21), die den Druckpartien (16) axial innen gegenüberliegt, und die bei in Löserichtung (24) nach axial innen erfolgendem Verschieben der Betätigungspartie (8) infolge der gegen sie arbeitenden Druckpartien (16) ein Verbringen der Klemmelemente (9) in die Lösestellung bewirkt,
und mit einer gehäuseseitig axial weiter außen als die Abstützfläche (21) vorgesehenen Anschlagfläche (23), die bei entgegen der Löserichtung erfolgendem Verschieben der Spannzange (6) eine Beaufschlagung der Klemmelemente (9) im Klemmsinne bewirkt,
dadurch gekennzeichnet,
daß der Schrägverlauf der Abstützfläche (21) so ausgebildet ist, daß ihr radial weiter innen liegender Bereich in Löserichtung (24) axial tiefer in der Gehäuseausnehmung (2) angeordnet ist als ihr radial weiter außen liegender Bereich.

2. Verbindungseinrichtung nach Anspruch 1, dadurch gekennzeichnet, daß die Anschlagfläche (23) einen schrägen Verlauf besitzt, wobei ihr radial weiter außen liegender Bereich in Löserichtung (24) axial tiefer in der Gehäuseausnehmung (2) zu liegen kommt als ihr radial weiter innen liegender Bereich.

3. Verbindungseinrichtung nach Anspruch 1 oder 2, dadurch gekennzeichnet, daß am Gehäuse (1) im Bereich der Gehäuseausnehmung (2) eine umlaufende nutartige Halterungsvertiefung (18) vorgesehen ist, die zwei sich axial mit Abstand gegenüberliegende und einander zugewandte Vertiefungsflanken besitzt, wobei die axial tiefer in der Gehäuseausnehmung (2) liegende Vertiefungsflanke die Abstützfläche (21) bildet.

4. Verbindungseinrichtung nach Anspruch 3, dadurch gekennzeichnet, daß die Klemmelemente (9) mit ihren Druckpartien (16) in den Bereich zwischen der Abstützfläche (21) und der gegenüberliegenden Vertiefungsflanke der Halterungsvertiefung (18) hineinragen.

5. Verbindungseinrichtung nach Anspruch 3 oder 4, dadurch gekennzeichnet, daß die Anschlagfläche (23) von der der Abstützfläche (21) gegenüberliegenden Vertiefungsflanke der Halterungsvertiefung (18) gebildet ist.

6. Verbindungseinrichtung nach einem der Ansprüche 1 bis 3, dadurch gekennzeichnet, daß die Spannzange (6) ein insbesondere aus Kunststoffmaterial bestehendes einstückiges Bauteil ist.

7. Verbindungseinrichtung nach einem der Ansprüche 1 bis 6, dadurch gekennzeichnet, daß zwischen den Druckpartien (16) und dem Grund (36) der Halterungsvertiefung (18) radiales Spiel vorgesehen ist.

8. Verbindungseinrichtung nach einem der Ansprüche 1 bis 7, dadurch gekennzeichnet, daß die Druckpartien (16) mit axialem Bewegungsspiel zwischen den Vertiefungsflanken der Halterungsvertiefung (18) angeordnet sind.

9. Verbindungseinrichtung nach einem der Ansprüche 1 bis 8, dadurch gekennzeichnet, daß die Halterungsvertiefung (18) einen im wesentlichen V-förmigen Flankenverlauf besitzt.

10. Verbindungseinrichtung nach einem der Ansprüche 1 bis 9, dadurch gekennzeichnet, daß der Spannzange (6) axial innen ein ringförmiges, axial verschiebbares Drückelement (40) gegenüberliegt, das bei Innendruckbeaufschlagung der Gehäuseausnehmung (2) oder des sich an diese anschließenden Gehäusekanales (3) axial gegen zugewandte Stützflächen (33) der Klemmelemente (9) arbeitet und deren Druckpartien (16) zur Unterstützung der Klemmwirkung gegen die Anschlagfläche (23) preßt.

11. Verbindungseinrichtung nach Anspruch 10, dadurch gekennzeichnet, daß das Drückelement (40) einem Dichtring (32) benachbart oder von einem solchen gebildet ist, der insbesondere im Bereich beider Axialseiten jeweils eine umlaufende, in Kontakt mit dem Außenumfang (7) eines eingesteckten Anschlußendes (4) stehende Dichtlippe (39, 39') aufweist.

12. Verbindungseinrichtung nach einem der Ansprüche 1 bis 11, dadurch gekennzeichnet, daß das Gehäuse (1) Bestandteil eines selbständigen Verbindungsstückes ist oder als Bestandteil eines Gerätegehäuses, z.B. eines Ventilgehäuses, ausgebildet ist.

13. Verbindungseinrichtung nach Anspruch 12, dadurch gekennzeichnet, daß im Falle eines Verbindungsstückes das Gehäuse (1) in der Gehäuseausnehmung (2) oder in dem sich an diese anschließenden Bereich des Gehäusekanales (3) einen insbesondere mehreckförmigen Innenprofilabschnitt (45) zum Ansetzen eines Schraubwerkzeuges aufweist.

## Claims

1. Connection device for pressure medium lines or the like, with a housing (1) having a housing recess (2) in which the connection end (4) of a pressure medium line (5) is insertable, with an annular collet (6) mounted in the area of the housing recess (2), this collet embracing the inserted connection end (4) and able to hold the latter releasably in a clamped position relative to the housing (1), wherein the collet (6) has an axially slidable annular or sleeve-shaped actuating section (8), on that side of which facing the inside of the housing recess (2) are provided a number of clamping elements (9) distributed circumferentially, which act against the periphery (7) of the relevant connection end (4), and are linked to the actuating section (8) via bending points (14), in order to permit movement of the clamping elements (9) between the clamping position and a release position which lies radially further outwards, with a pressure section (16) provided on each clamping element (9) and lying radially further outwards relative to the assigned bending point (14), with an inclined support face (21) provided on the housing side, lying axially inwards opposite the pressure sections (16) and which, when the actuating section (8) moves axially inwards in the release position (24), brings the clamping elements (9) into the release position as a result of the pressure sections (16) acting against it, and with a contact face (23) provided on the housing side, axially further outwards than the support face (21), which when the collet (6) is moved against the release direction, effects a clamping action of the clamping elements (9), characterized in that the inclined slope of the support face (21) is so designed that its radially further inwards section in the release position (24) is located axially deeper in the housing recess (2) than its radially further outwards section

2. Connection device according to claim 1, characterized in that the contact face (23) is inclined, with that section of it lying radially further outwards coming to lie axially deeper in the housing recess (2) in the direction of release (24) than its radially further inwards section.

3. Connection device according to claims 1 or 2 characterized in that, provided on the housing (1) in the area of the housing recess (2) is a circular slot-like retaining recess (18) with two recess flanks facing one another and axially opposite with clearance, and with that recess flank which lies deeper in the housing recess (2) forming the support face (21).

4. Connection device according to claim 3, characterized in that the clamping elements (9) with their pressure sections (16) project into the area between the support face (21) and the opposite recess flank of the retaining recess (18).

5. Connection device according to claims 3 or 4, characterized in that the contact face (23) is formed by the recess flank of the retaining recess (18) opposite the support face (21).

6. Connection device according to any of claims 1 to 3, characterized in that the collet (6) is a one-piece component, in particular made of plastic.

7. Connection device according to any of claims 1 to 6, characterized in that radial play is provided between the pressure sections (16) and the base of the retaining recess (18).

8. Connection device acccording to any of claims 1 to 7, characterized in that the pressure sections (16) are mounted with axial freedom of movement between the recess flanks of the retaining recess (18).

9. Connection device according to any of claims 1 to 8, characterized in that the retaining recess (18) has an essentially V-shaped flank profile.

10. Connection device according to any of claims 1 to 9, characterized in that, axially inwards opposite the collet (6) lies an annular, axially-movable pressure element (40) which, when internal pressure acts on the housing recess (2) or the housing duct (3) adjacent to the latter, operates axially against facing support faces (33) of the clamping elements (9) and presses their pressure sections (16) against the contact face (23) in support of the clamping action.

11. Connection device according to claim 10, characterized in that the pressure element (40) is adjacent to or formed by a seal ring (32) which has, in particular in the area of each of the two axial sides, a circular sealing lip (39, 39') in contact with the outer periphery (7) of an inserted connection end (4).

12. Connection device according to any of claims 1 to 11, characterized in that the housing (1) is part of an independent connection unit or is designed as part of an equipment housing, e.g. a valve housing.

13. Connection device according to claim 12, characterized in that, in the case of a connection unit, the housing (1) has in the housing recess (2) or in the adjacent area of the housing duct (3) an internal profiled section (45), in particular polygonal, for the placing of a tightening tool.

## Revendications

1. Raccord pour conduites de fluide sous pression ou similaires, comportant un boîtier (1) qui présente un évidement (2) dans lequel peut être introduite l'extrémité de raccordement (4) d'une conduite de fluide sous pression (5),
comportant une pince de serrage (6) annulaire, maintenue dans la zone de l'évidement (2) du boîtier, qui entoure l'extrémité de raccordement (4) insérée et peut fixer celle-ci dans une position de serrage, de manière amovible par rapport au boîtier (1),
la pince de serrage (6) comportant une partie d'actionnement (8), annulaire ou en forme de douille, déplaçable axialement, qui présente, sur son côté tourné vers l'intérieur de l'évidement (2) du boîtier, une pluralité d'éléments de serrage (9) répartis périphériquement, qui, dans la position de serrage, agissent contre la périphérie (7) de l'extrémité de raccordement (4) concernée, et qui sont reliés, par des points de pliage (14), avec la partie d'actionnement (8), afin de permettre un déplacement des éléments de serrage (9) entre la position de serrage et une position de desserrage, située radialement plus loin vers l'extérieur,
comportant une partie de pression (16) prévue sur l'élément de serrage (9) respectif, située radialement plus loin vers l'extérieur que le point de pliage (14) correspondant,
comportant une surface d'appui (21) oblique, prévue côté boîtier, qui fait face à l'intérieur axialement aux parties de pression (16) et qui amène les éléments de serrage (9) dans la position de desserrage, lorsque la partie d'actionnement (8) a été déplacée axialement vers l'intérieur, dans le sens du desserrage (24), par suite des parties de pression (16) agissant contre celle-ci,
et comportant une surface de butée (23) prévue côté boîtier, plus loin axialement vers l'extérieur que la surface d'appui (21), surface de butée qui sollicite les éléments de serrage (9) dans le sens du serrage, lorsque la pince de serrage (6) a été déplacée dans le sens contraire au sens de desserrage,
caractérisé en ce que
le parcours oblique de la surface d'appui (21) est tel que sa zone située plus loin radialement vers l'intérieur dans le sens du desserrage (24) se trouve plus profondément axialement dans l'évidement (2) du boîtier que sa zone située radialement plus loin vers l'extérieur.

2. Raccord selon la revendication 1, caractérisé en ce que la surface de butée (23) présente un parcours oblique, sa zone située radialement plus loin vers l'extérieur venant se trouver, dans le sens du desserrage (24), plus profondément axialement dans l'évidement (2) du boîtier que sa zone située radialement plus loin vers l'intérieur.

3. Raccord selon les revendications 1 ou 2, caractérisé en ce qu'il est prévu sur le boîtier 1, dans la zone de l'évidement (2), un creux de fixation (18) en forme de rainure périphérique, qui possède deux flancs espacés axialement, se faisant face et tournés l'un vers l'autre, le flanc situé axialement plus profondément dans l'évidement (2) du boîtier formant la surface d'appui (21).

4. Raccord selon la revendication 3, caractérisé en ce que les éléments de serrage (9) avec leurs parties de pression (16) pénètrent dans la zone comprise entre la surface d'appui (21) et le flanc lui faisant face du creux de fixation (18).

5. Raccord selon les revendications 3 ou 4, caractérisé en ce que la surface de butée (23) est formée par le flanc, faisant face à la surface d'appui (21), du creux de fixation (18).

6. Raccord selon l'une des revendications 1 à 3, caractérisé en ce que la pince de serrage (6) est un composant d'une seule pièce réalisé en particulier dans une matière synthétique.

7. Raccord selon l'une des revendications 1 à 6, caractérisé en ce qu'il est prévu un jeu radial entre les parties de pression (16) et le fond (36) du creux de fixation (18).

8. Raccord selon l'une des revendications 1 à 7, caractérisé en ce que les parties de pression (16) sont placées avec un jeu de déplacement axial entre les flancs du creux de fixation (18).

9. Raccord selon l'une des revendications 1 à 8, caractérisé en ce que le creux de fixation (18) présente des flancs s'étendant sensiblement en V.

10. Raccord selon l'une des revendications 1 à 9, caractérisé en'ce qu'à la pince de serrage (6) fait face à l'intérieur axialement un élément de pression (40) annulaire, déplaçable axialement, qui lorsqu'une pression intérieure agit sur l'évidement (2) du boîtier ou sur le canal (3) s'y raccordant du boîtier, agit contre des surfaces d'appui (33) tournées vers celui-ci des éléments de serrage (9) et presse leurs parties de pression (16) en vue de favoriser l'effet de serrage contre la surface de butée (23).

11. Raccord selon la revendication 10, caractérisé en ce que l'élément de pression (40) est voisin d'une bague d'étanchéité (32) ou est formé par une bague d'étanchéité de ce type, qui présente en particulier dans la zone de chacune des deux faces axiales, une lèvre d'étanchéité (39, 39') périphérique, en contact avec le pourtour extérieur (7) d'une extrémité de raccordement (4) insérée.

12. Raccord selon l'une des revendications 1 à 11, caractérisé en ce que le boîtier (1) fait partie intégrante d'une pièce de raccord indépendante ou fait partie intégrante d'un boîtier d'appareil, par exemple d'un boîtier de soupape.

13. Raccord selon la revendication 12, caractérisé en ce que dans le cas d'une pièce de raccord, le boîtier (1) présente dans l'évidement (2) ou dans la zone se raccordant à celui-ci du canal (3) du boîtier, une partie profilée intérieurement (45), en particulier polygonale, pour permettre d'appuyer un outil de vissage.
